# EUROPEAN PATENT SPECIFICATION

(11) **EP 4 214 168 B1**
(45) Date of publication and mention of the grant of the patent: **11.03.2026**
(21) Application number: 21785983.4
(22) Date of filing: 13.09.2021
(51) Int. Cl.: C03C 3/078, C03C 3/095, C03C 4/08

(54) **GLASS CONTAINER AND PREPARATION METHOD THEREOF**
GLASBEHÄLTER UND HERSTELLUNGSVERFAHREN DAFÜR
RÉCIPIENT EN VERRE ET SON PROCÉDÉ DE PRÉPARATION

(30) Priority: 15.09.2020 IT 202000021751; 08.02.2021 IT 202100002693
(43) Date of publication of application: 26.07.2023
(73) Proprietor: Bormioli Luigi S.p.A., 43122 Parma (IT)
(72) Inventor: PACIOLLA, Antonio, 42019 Scandiano (RE) (IT); BARATTA, Simone, 43124 Parma (IT); FAVA, Emanuela, 43126 Parma (IT)
(74) Representative: Bottero, Carlo
(86) International application number: PCT/IB2021/058295
(87) International publication number: WO 2022/058862

(56) References cited:
- GB-A- 2 325 927
- US-A1- 2004 157 721
- US-B1- 6 800 575

## Description

### Field of the invention

The present invention relates to a glass container and the preparation method thereof. In particular, the glass container according to the invention is capable of filtering ultraviolet light radiation, while possessing high transparency to visible radiation and a neutral colour.

### Background of the Invention

It is well known that ultraviolet (UV) light radiation can interact with numerous substances in the liquid, solid and semi-solid state, causing their degradation. This phenomenon affects, for example, cosmetic products (e.g. perfumes, lotions, creams, etc.) and food products (wine, beer, oil, etc.), where the interaction with the UV radiation can cause the loss of product stability or alteration of organoleptic, chemical-physical and microbiological properties.

In the perfumery and cosmetics sector, to avoid these drawbacks, the products are generally formulated with suitable stabilising agents capable of guaranteeing their preservation over time, protecting them from the possible effects of the exposure to UV radiations. However, the growing trend in the perfumery and cosmetics market to offer products that are as natural as possible, that is, as much as possible free of synthetic chemical compounds, today generates a strong push to reduce or eliminate stabilising agents from the formulations. However, the elimination of the stabilising agents from perfume and cosmetic formulations requires that they are packaged in containers capable of guaranteeing adequate protection of the product from exposure to UV radiation.

In the state of the art, the use of glass containers capable of filtering out all or part of the UV radiations has long been known. For example, beverages such as beer and wine are generally packaged in coloured glass bottles (e.g. brown, green, blue), which adequately protect the contents from UV radiations. The colour of the glass is due to the presence of inorganic compounds based on iron, chromium or cobalt, which not only absorb the specific UV radiations potentially harmful to these liquids, but also some of the wavelength radiations in the visible light range (Vis), giving the glass its colouring.

However, in many sector, particularly the cosmetic one, it is required that the glass containers capable of blocking UV radiations also have high transparency and neutral colouring to allow the user to fully appreciate the appearance of the product in the container or simply for aesthetic reasons. To solve this technical problem, it is known to include in the glass composition certain oxides capable of absorbing the UV radiation, especially cerium oxides, titanium oxides and vanadium oxides.

An example of transparent, neutral-coloured glass containers capable of filtering the UV radiation is described in US 2007/0155610. The glass forming these containers is a soda-lime glass, the composition of which includes iron oxides, vanadium oxide and manganese oxide in specific weight ratios to each other. Vanadium oxide (V₂O₅) absorbs the UV radiation, acting as a filter against this radiation. Manganese oxide (MnO), on the other hand, acts as a decolouring agent, masking the green colour that derives from the presence of vanadium oxide. The containers described in US 2007/0155610 are suitable for use in the packaging of food and cosmetic products. However, in the perfumery cosmetic sector the need is felt to have alternative solutions in order to manufacture glass containers that are able to guarantee an adequate shelf life of the products and, at the same time, which allow to clearly see the appearance and the colour of the product contained therein.

US 6 800 575 B1, US 2004/157721 A1 and GB 2 325 927 A disclose coloured soda-lime glasses with a high UV absorbance.

### Summary of the invention

In view of the aforementioned state of the art, the Applicant has set itself the primary objective of providing a glass container capable of filtering, at least partially, the UV radiation which is at the same time highly transparent and of a substantially neutral colour.

The Applicant has found that the aforementioned and other purposes, which will be better explained in the description below, can be achieved by means of a soda-lime glass container, in which the absorption of the UV radiation is achieved by inclusion in the glass composition of vanadium oxide in combination with a specific decolouring system.

The decolouring system comprises at least a first optical absorber selected from erbium oxide (Er₂O₃) and metallic Se (Se°) and a second optical absorber consisting of cobalt oxide (Co₃O₄). It has been found that the aforesaid decolouring system, through the combined action of absorbing the light radiation of the first and second optical absorber, effectively compensates for the green colouring imparted by vanadium oxide, thus making it possible to obtain a glass with a substantially neutral and highly transparent colour.

To achieve the desired end result, vanadium oxide is dosed into the glass composition in an amount such as to impart the required UV-filtering power to the final container. The optical absorbers of the decolouring system are dosed into the glass composition in amounts such as to compensate for the specific colour drift imparted by the UV absorber.

The decolouring system according to the present invention has the advantage of being less sensitive to the oxidation state of the glass (redox potential) because its efficacy is linked to elements having fewer oxidation states (in particular erbium and cobalt) than decolouring systems of the prior art, such as manganese-based systems.

In accordance with a first aspect, the present invention thus relates to a soda-lime glass container wherein the glass composition includes:

| | |
|---|---|
| - 64% - 75% | SiO₂ |
| - 10% - 18% | Na₂O |
| - 5% - 15% | CaO |

- a UV absorber comprising 0.01% - 0.5% V₂O₅;
- a decolouring system comprising the following optical absorbers:
   a. at least one of: 0.01% - 0.3% of Er₂O₃ and 0.0001% - 0.0005% of Se in the metallic state; and
   b. 0.00005 % - 0.0005 of Co₃O₄,
the aforesaid percentages being percentages by weight referred to the weight of the glass.

In accordance with a second aspect, the present invention relates to a method for producing the aforesaid soda-lime glass container wherein the glass composition comprises:

| | |
|---|---|
| - 64% - 75% | SiO₂ |
| - 10% - 18% | Na₂O |
| - 5% - 15% | CaO |

- a UV absorber comprising 0.01% - 0.5% V₂O₅;
- a decolouring system comprising the following optical absorbers:
   a. at least one of: 0.01% - 0.3% of Er₂O₃ and 0.0001% - 0.0005% of Se in the metallic state; and
   b. 0.00001 % - 0.0005 of Co₃O₄,
the aforesaid percentages being percentages by weight referred to the weight of the glass;
wherein said method comprises:
- melting a solid vitrifiable mixture comprising all the aforesaid components of the composition to obtain a melted vitrifiable mass;
- forming the melted vitrifiable mass to obtain the glass container.

In accordance with a third aspect, the present invention relates to an alternative method for producing the aforesaid sodium-calcium glass container wherein the glass composition comprises:

| | |
|---|---|
| - 64% - 75% | SiO₂ |
| - 10% - 18% | Na₂O |
| - 5% - 15% | CaO |
| - a UV absorber comprising 0.01% - 0.5% | V₂O₅; |

- a decolouring system comprising the following optical absorbers:
   a. at least one of: 0.01% - 0.3% of Er₂O₃ and 0.0001% - 0.0005% of Se in the metallic state; and
   b. 0.00005 % - 0.0005 of Co₃O₄,

the aforesaid amounts being referred to the weight of the glass;
wherein said method comprises the following stages:
   A. melting a solid vitrifiable mixture comprising a part of the aforesaid components of the glass composition to obtain a melted vitrifiable mass, said part comprising at least said SiO₂, Na₂O, CaO and optionally one or more of the components of said UV absorber and said decolouring system;
   B. transporting the melted vitrifiable mass to at least one forming device;
   C. combining the remaining part of the aforesaid components with the melted vitrifiable mass by means of one or more glass frits, the remaining part of the aforesaid components comprising at least one of the components of the UV absorber and of the decolouring system;
   D. forming the melted vitrifiable mass coming from stage C to obtain the glass container.

All the components of the UV absorber and of the decolouring system are thus added in the aforesaid stage C or only those which have not been included in the solid vitrifiable mixture of stage A.

Further features and advantages of the present invention will be apparent from the following detailed description.

### Detailed description of the invention

For the purposes of this description and the appended claims, the content of an oxide of a certain chemical element in oxide form is expressed as a percentage by weight of a reference oxide, calculated with respect to the total weight of the glass, regardless of what the actual oxidation state of the element in the glass is. For example, in the case of vanadium (V), it may occur in the form of an oxide with different oxidation states (in particular V₂O₃, V₂O₄, V₂O₅), but the percentage of vanadium oxide in the glass is expressed as a total percentage by weight of V₂O₅, although vanadium may actually be present in the glass as an oxide other than V₂O₅ or as a mixture of oxides, in which vanadium has different oxidation states.

The chemical composition of the glass can be determined by X-ray fluorescence (XRF) analysis.

When a parameter, for example the concentration of a component of the glass composition, the UV filtering power or the total transmission of light radiation, is expressed by minimum and maximum preferred values, it is understood that any range deriving from a combination of a minimum and a maximum value is described for that parameter. Each range of values of a first parameter (e.g., the concentration of a first component of the glass composition) is understood to be described also in combination with any range of values of a second parameter (e.g., the concentration of a second component of the glass composition).

For the purposes of the present description and the appended claims, the compositions according to the present invention may "comprise", "consist of" or "consist essentially of" the essential and optional components described in the present description and the appended claims. For the purposes of the present description and the appended claims, the term "consist essentially of" means that the composition or the component may include additional ingredients, but only to the extent that the additional ingredients do not materially alter the essential characteristics of the composition or component.

Unlike the embodiments, or where otherwise indicated, all the numbers expressing amounts of ingredients, reaction conditions, and so on, used in the disclosure and claims are to be understood as modified in all cases by the term "about".

The glass forming the container according to the present invention has one or more of the following characteristics:
- the filtering power (PF) of the UV radiation, measured in the range 300 nm - 450 nm over a thickness of 4 mm, is equal to or greater than 10%, preferably in the range 10% - 40%. For the purpose of this description, the filtering power PF corresponds to the 100% value decreased by the average value (arithmetic mean) of the transmission of light radiation in the range 300 nm - 450 nm;
- total light transmission, calculated on a thickness of 4 mm starting from an experimental spectrum, equal to or greater than 85%, preferably equal to or greater than 90%, even more preferably equal to or greater than 95%. For the purposes of this description, the total light transmission is determined considering the illuminant C according to the ISO/CIE 10526 standard and the CIE 1931 colourimetric observer as defined in the ISO/CIE 10527 standard.

The glass according to the invention possesses a substantially neutral colouring, i.e. its transmission curve of the light radiation does not vary significantly in the wavelength range of the visible radiation 450 nm - 780 nm.

The glass according to the invention is also defined below by its chromatic coordinates L*, a* and b* calculated from an experimental spectrum on a 4 mm thick glass specimen, taking as reference the reference observer "CIE 1931" and the standard illuminant C, both defined by the CIE (*Commission internationale de l'éclairage*)*.* Using this notation, a body with a neutral colouring is characterised by a pair of parameters (a*, b*) close to (0.0).

The glass according to the invention has one or more of the following chromatic coordinate values:
- a* in the range from -1 to +1, preferably from - 0.5 to +0.5, more preferably from -0.25 to +0.25;
- b* in the range from -1 to +1, preferably from - 0.5 to +0.5.

It is also possible to characterise the glass through the parameter c* (*chroma*) *.* The parameter c* expresses the colour saturation and can be calculated starting from a* and b* by means of the formula c* = (a*² + b*²)^{1/2}. The value of c* tends to zero the more the colour of the glass tends towards neutrality. Preferably, the parameter c* is equal to or less than 1, more preferably equal to or less than 0.8 even more preferably equal to or less than 0.5.

Preferably, the glass according to the invention is a "clear glass" according to the following requirements defined in the ISO PAS IWA 8:2009 standard:
- Brightness (L*) equal to or greater than 98.0,
- Chroma (c*) less than or equal to 0.5,
- iron content less than or equal to 0.020 % by weight.

The glass forming the container according to the present invention comprises vanadium oxide, which acts as a UV absorber, in amounts in the range 0.01% - 0.5% of V₂O₅, preferably in the range 0.05% - 0.2% of V₂O₅, the aforesaid percentages being referred to the weight of the glass. Vanadium can exist in the glass in three oxidation states. The V⁵⁺ ion is responsible for absorbing the UV radiation, while the V⁴⁺ and V³⁺ ions absorb visible light, giving the glass an undesirable green colouring. In view of the high cost of vanadium oxide and the green colouring it imparts to the glass (the intensity of the colouring increases as the vanadium concentration increases), the vanadium content is preferably limited to what is necessary to give the glass the desired filtering power.

The desired filtering power for glass can be achieved by using a reduced vanadium content by adding this element in combination with cerium. In the glass, cerium can be found in the oxidation states Ce³⁺ and Ce⁴⁺, Ce³⁺ being a more effective UV absorber than Ce⁴⁺.

Cerium is present in the glass preferably in amounts in the range 0.01% - 0.1% CeO₂, preferably in the range 0.025% - 0.06% CeO₂, the aforesaid percentages being referred to the weight of the glass. When they are used in a mixture, the mass ratio of V₂O₅ to CeO₂ is preferably in the range from 3:1 to 2:1.

In one embodiment, cerium oxide CeO₂ is present in the glass preferably in amounts in the range of 0.002% - 3.0% by weight, preferably in the range of 0.1% - 1.0% by weight, the aforesaid percentages being referred to the weight of the glass.

As is well known, under certain conditions, the simultaneous presence of cerium oxide and vanadium oxide can give rise to the so-called "solarisation" phenomenon of the glass, i.e. the change in the colouring of the glass as a result of the prolonged exposure to high-energy radiations, such as UV radiations. Therefore, in another embodiment, for example when it is necessary to ensure that the glass forming the container remains substantially colourless even following prolonged exposure to UV radiation, preferably the composition of the glass is substantially CeO₂-free. Preferably, the CeO₂ content is less than 0.01% by weight, more preferably equal to or less than 0.005% by weight, even more preferably equal to or less than 0.002% by weight, the aforesaid percentages being referred to the weight of the glass.

In certain applications, however, it is desirable or even indispensable to use CeO₂ in the glass formulation. In the industrial productions of high-quality glass, such as glass for perfumery, for example, CeO₂ is widely used as an oxidising agent, in particular to control the oxidation state of iron and therefore avoid colour drifts due to the presence of an excessive amount of Fe²⁺ ions. Furthermore, in industrial plants where different types of glass or containers are produced starting from the same basic glass mixture, the elimination of CeO₂ from the basic glass formulation fed to the melting furnace would inevitably affect all types of downstream productions, including those for which the solarisation phenomenon is not a problem (e.g. glasses that do not have UV rays filtering characteristics).

The Applicant has now surprisingly found that it is possible to inhibit the reaction between V₂O₅ and CeO₂, and thus the solarisation phenomenon, by incorporating bismuth oxide into the glass composition.

It has been observed that the presence of bismuth oxide, in addition to inhibiting the solarisation reaction and thus the colour change of the glass following prolonged exposure to UV radiations from sunlight, does not significantly affect the filtering power of the glass. This makes it possible to obtain glasses with UV rays filtering capabilities, whose colouring is stable on exposure to solar radiations, even in the presence of cerium oxide.

Preferably, bismuth oxide is present in the glass in amounts in the range 0.5% - 3.0% by weight of Bi₂O₃, preferably in the range 1.0% - 2.5% by weight, more preferably in the range 1.5% - 2.0% by weight, the aforesaid percentages being referred to the weight of the glass.

Preferably, the weight ratio CeO₂/Bi₂O₃ is in the range from 1:100 to 1:15, more preferably in the range from 1:50 to 1:20.

To correct the green colour generated by the interaction of the light radiation with vanadium ions, the glass comprises at least a first optical absorber chosen from Se in the metallic state and erbium oxide Er₂O₃ or a mixture thereof. This optical absorber is characterised by the fact that it imparts a pink colouring to the glass.

The oxide Er₂O₃ is present in the glass in amounts in the range 0.01% - 0.3% by weight referred to the weight of the glass, preferably in the range 0.01% - 0.2% by weight, even more preferably in the range 0.03% - 0.08% by weight.

As is well known, selenium absorbs the visible radiation only in the elemental state. In accordance with the present invention, Se is present in the glass in amounts in the range 0.00001% - 0.0005% Se (0.1 ppm - 5 ppm Se) referred to the weight of the glass, preferably in the range 0.00015% - 0.0003% Se. The aforesaid amounts of Se expressed as Se in the metallic state represent the total selenium content in the glass, irrespective of its oxidation state.

In a preferred embodiment, the decolouring system contains a mixture of Er₂O₃ and Se. The use of a mixture of these two optical absorbers makes it possible to limit the erbium content introduced into the glass formulation, resulting in a composition with a lower environmental impact. When they are used in a mixture, the mass ratio of Er₂O₃ to metallic Se is preferably in the range between 300:1 to 100:1.

Since the addition of the first optical absorber of the decolouring system imparts a colouring tending to yellow-pink to the glass, the decolouring system contains Co₃O₄ as a second optical absorber. This oxide, which is blue in colour, allows the colouring of the glass to be further corrected, allowing to obtain a final glass with a neutral colouring.

The combination of UV absorber and decolouring system used in the present invention is not particularly sensitive to the oxidation-reduction potential (redox potential) of the glass. Preferably, the redox potential of the glass, which can be defined by the molar ratio of its content of ferrous oxide (FeO) to ferric oxide (Fe₂O₃), is in the range 0.10 - 0.40, more preferably in the range 0.20 - 0.35. The redox potential of the glass can be controlled by introducing oxidising agents (e.g. sodium sulphate, sodium nitrate) and reducing agents (e.g. FeS₂, graphite). The content of the oxidising and reducing agents is adjusted so as to achieve the desired redox potential for the glass.

Preferably, the total content of iron present in the glass is in the range 0.0100 - 0.0300 by weight of Fe₂0₃, more preferably in the range 0.0130 - 0.0180, the aforesaid percentages being referred to the weight of the glass.

Preferably, the glass according to the invention does not comprise other UV absorbers and optical decolouring absorbers other than V₂O₅, CeO₂, Er₂O₃, Se and Co₃O₄. In particular, the glass does not comprise one or more of the following absorbing agents: oxides of transition elements, such as CuO, Cr₂O₃, MnO₂, TiO₂, rare earth oxides other than Er₂O₃ and CeO₂, such as La₂O₃, Nd₂O₃ or absorbers in the elemental state, such as Ag and Cu.

The total content of these absorbers is preferably less than 2% by weight referred to the weight of the glass, more preferably less than 1% by weight, even more preferably less than 0.5% by weight, the aforesaid percentages being referred to the weight of the glass.

The use of the optical absorbers according to the invention in the amounts indicated in the present description makes it possible to obtain glass containers having the desired properties in terms of filtering power, transparency and substantial colouring absence. In this respect, it should be noted that, in general, it is difficult to predict the optical properties of a glass containing several optical absorbers, as these properties result from the complex interactions among the different absorbers present, the action of each absorber also depending on their oxidation state and the glass matrix. This is particularly true in the case of the compositions according to the present invention, which include more than two elements existing in different valence states.

In the present description, the expression "sodium-calcium glass" is used to refer generally to a glass matrix comprising the following components:

| | |
|---|---|
| 64% - 75% | SiO₂ |
| 10% - 18% | Na₂O |
| 5% - 15% | CaO. |

Considering also some optional components, the sodium-calcium glass can comprise:

| | |
|---|---|
| 64% - 75% | SiO₂ |
| 10% - 18% | Na₂O |
| 5% - 15% | CaO |
| 0% - 10% | MgO |
| 0% - 5% | Al₂O₃ |
| 0% - 5% | ZnO |
| 0% - 5% | B₂O₃ |
| 0% - 5% | K₂O |
| 0% - 5% | BaO. |

The composition of soda-lime glass may also include small amounts of other components (up to 1% by total weight with respect to the weight of the glass), such as fluxing and refining agents (e.g. SO₃, Cl, Sb₂O₃, As₂O₃), in addition to the inevitable impurities contained in the raw materials or in the glass cullet that may be added to the solid vitrifiable mixture being melted.

The glass containers according to the present invention can be produced with the devices and production methods known to those skilled in the art.

In general, the cycle for producing a glass container comprises the steps of: melting a solid vitrifiable mixture to obtain a melted mass; forming the melted mass to obtain the glass container; annealing the glass container and final finishing.

The solid vitrifiable mixture is melted in melting furnaces, generally operating continuously, to which the components of the mixture are automatically fed. The mixture comprises virgin raw materials in powder form and additive materials (fluxes, stabilising agents, colouring agents, decolouring agents, refining agents, oxidizing agents, reducing agents, etc.). The mixture may also comprise post-industrial recycled (PIR) or post-consumer recycled (PCR) glass cullet.

The melted vitrifiable mass obtained from the melt passes from the melting furnace basin to a refining zone (*refiner*) and from there, through a series of feeding channels (*feeder* or *forehearth*)*,* also known as heat conditioning channels, it is transported to a series of forming devices for the realization of the containers by means of techniques, such as for example, pressing, blowing, press-blow, blow-blow or moulding. The containers exiting the forming devices are subjected to an annealing heat treatment to eliminate the tensions that are generated in the glass during forming. Finally, in the finishing step, the container finishing operations are carried out (cutting, decoration, etc.).

The addition of the UV absorber and decolouring system components can be carried out in the furnace according to the so-called "mass colouring" technique, i.e. by introducing the aforesaid components into the solid vitrifiable mixture being melted. Alternatively, the aforesaid components, or at least part of them, can be added to the feeding channels in which the liquid vitrifiable mass coming from the melting furnace flows and which is fed to the forming devices according to the so-called *"feeder* colouring" technique. The UV absorber and decolouring system components can also be fed partly into the solid vitrifiable mixture and partly into the feeding channel.

Feeder colouring requires specific feeding and mixing devices, however it has the advantage of allowing greater production flexibility and of offering a rapid visual response to the composition changes that are made to the glass during the container manufacturing process.

In the case of feeder colouring, one or more of the components of the UV absorber and/or the decolouring system are incorporated into the melted vitrifiable mass by means of glass frits to form, after homogenisation with the melted mass, a glass container according to the invention. The different components can be added using different frits, however, it may be advantageous in certain cases to use a single frit containing all the components the addition of which to the glass composition is wished. Preferably, the total content of the components added by means of a glass frit is in the range from 15% to 40% by weight with respect to the weight of the frit, so as to be able to add the frit to the vitrifiable mass in a dilution ratio not greater than 10% by weight, preferably not greater than 8% by weight.

A glass frit containing V₂O₅ and Bi₂O₃ which can be fed, for example, to a liquid vitrifiable mass containing CeO₂, may have the following composition:

| | |
|---|---|
| - SiO₂ | 35-45% |
| - Bi₂O₃ | 15-25% |
| - V₂O₅ | 1-3% |
| - K₂O | 15-20% |
| - Na₂O | 0-5%, preferably 0.2% |
| - Li₂O | 0-2% |
| - B₂O3 | 10-30%, preferably 10-20% |
| - Al₂O₃ | 0-2%. |

Preferably, the frit used to feed the UV absorber components, the decolouring system and the stabilising (anti-solarisation) component has one or more of the following characteristics:
- Density less than or equal to 3.0 g/dm³;
- Melting temperature (Tₘ) within the range 1050-1250°C, preferably within the range 1160-1200°C (according to ISO 7884-3:1987; temperature value measured at Log η = 2, η expressed in Poise);
- Softening temperature (Tₛ) within the range 550-650°C, preferably within the range 600-630°C (according to ISO 7884-3:1987; temperature value measured at Log η - 7.6, η expressed in Poise);
- annealing temperature (Tₘ) within the range 400-500°C, preferably within the range 460-490°C (according to ISO 7884-3:1987; temperature value measured at Log η - 13.3, η expressed in Poise).

Under the aforesaid conditions, the frit is preferably fed in an amount comprised between 2% and 8% by weight, preferably between 4% and 6% by weight, the aforesaid percentages being referred to the weight of the glass.

In general, the dosage of the frit varies according to the specific container to be made, because the concentration of the system of oxides V₂O₅, CeO₂ and optionally Bi₂O₃ to achieve the UV protection effect and possibly avoid solarisation is correlated to specific container parameters such as shape, weight and thickness.

The components of the decolouring system (Er₂O₃ and/or Se, Co₃O₄) can be included in the same frit containing V₂O₅ and optionally CeO₂ and Bi₂O₃. More preferably, each of the components of the decolouring system is fed by means of a specific frit, separately from the other components, so that the ratio of these components to the oxides of V₂O₅, CeO₂ and Bi₂O₃ can be more easily modified.

The soda-lime glass that can be made capable of filtering UV radiations by using the oxides as described herein can be a glass of standard industrial formulation (e.g. soda-lime glass typically used in the manufacture of perfumery and cosmetic bottles or jars), but also of a different formulation, such as crystalline glass or glass having another chemical composition. It may also contain PCR glass in its inside, which is preferably fed into the melting furnace together with the virgin raw materials.

In addition, the glass with UV-filtering capacity according to the present invention is recyclable and is easily recognized by the optical systems installed on the collection and separation plants for glass recovery. It can therefore be introduced an indefinite number of times in the life cycle of the same product and of glass in general.

Preferably, the glass container according to the present invention is a container in the shape of a bottle, flacon, pot, etc., for packaging, for example, perfumes, cosmetic products (creams, lotions, detergents, etc.), food products or pharmaceutical products. The packaged product can be in the form of liquid, cream, paste, powder, etc..

The glass container according to the present invention, however, is particularly suitable for use in the packaging of perfumes and cosmetic products.

The glass container can also be subjected to conventional finishing processes, such as film coating, lacquering, etc., and can be recycled indefinitely without any particular restrictions.

To further understand the characteristics of the present invention, the following embodiment is provided below.

### EXAMPLE 1

Two glass samples were prepared according to the invention, the compositions of which had the contents of V₂O₅, CeO₂, Er₂O₃, Se and Co₃O₄, shown in Table 1.

The compositions in Table 1 were obtained from the following vitrifiable mixture, the composition of which is expressed in terms of percentages by weight of the oxides that compose it:
- SiO₂ = 72.03%
- Na₂O = 14.16%
- CaO = 9.16%
- MgO = 2.19%
- Al₂O₃ = 2,10%
- K₂O = 0.01%
- Fe₂O₃ = 0.02%
- SO₃ = 0.29%
- Er₂O₃ = 0.04%.

The UV absorber and the decolouring system were added by feeder colouring, in the form of frits. Part of the erbium oxide with decolouring function was also added in the starting vitrifiable mixture (mass colouring) to neutralise the colouring imparted to the glass by the presence of iron.

For comparison, a comparative glass sample was prepared starting from the same vitrifiable mixture, without addition to the feeder of V₂O₅, CeO₂, Er₂O₃, Se and Co₃O₄.

For each of the prepared samples, the following parameters were determined on a 4 mm-thick flat specimen:
- filtering power (PF) of UV radiation in the range 300 nm - 450;
- chromatic coordinates L*, a*, b* and c*.

The results of the characterization are reported in Table 1.

**Table 1**

| | | | |
|---|---|---|---|
| | 1 | 2 | 3^{(a)} |
| V₂O₅ (UV absorber) | 0.1^{(b)} | 0.06^{(b)} | |
| CeO₂ (UV absorber) | | 0.5^{(b)} | 0.05 |
| Er₂O₃ (decolouring agent) | 0.3^{(b)} | 0.15^{(b)} | |
| Se (decolouring agent) | 0.00015^{(b)} | 0.00015^{(b)} | |
| Co₃O₄ (decolouring agent) | 0.00021^{(b)} | 0.00020^{(b)} | |
| UV filtering power (%) | 33.0 | 32.2 | 8.7 |
| a* | -0.06 | -0.133 | 0.07 |
| b* | 0.328 | 0.347 | 0.281 |
| c* | 0.331 | 0.363 | 0.283 |
| L* | 98.02 | 97.35 | 98.47 |

| | | | |
|---|---|---|---|
| a: comparative example; b: percentage by weight referred to the weight of the vitrifiable mixture. | | | |

The data in Table 1 show that the glasses according to the invention are substantially colourless, possess a significantly higher UV radiation filtering power than that of the comparative glass and high transparency.

In order to verify the effectiveness of the glass according to the invention in ensuring adequate stability of cosmetic products against degradation processes due to exposure to UV radiations, three glass bottles having the same composition as samples 1 - 3 were made.

Each container (volume 100 ml) was filled with a perfuming formulation and then subjected to a sunlight stability test (so-called "sun test"). In a first test, the three samples were exposed to a light radiation in the range 300 nm - 800 nm, produced by a xenon lamp, for a duration of 24 hours (illuminance 765 W/m²). In a second test, the samples were exposed to the same radiation for 48 hours (illuminance 1.1 W/m²).

At the end of the tests, each treated perfuming formulation was subjected to colourimetric analysis by UV-Visible spectrophotometry to determine the values of the colourimetric coordinates a* and b*.

Each formulation was also subjected to olfactory analysis to highlight any degradation of the perfuming fragrance compared to the original formulation not subjected to the sun test.

For the formulations packaged in the bottles 1 and 2 according to the invention, in both tests the colourimetric analysis showed neither significant variations in the chromatic coordinates compared to the original formulation nor perceptible olfactory alterations.

In the case of bottle 2, at the end of both tests, a shift in the colouring of the glass from neutral to pink-purple was observed, probably due to the solarisation phenomenon caused by the simultaneous presence of V₂O₅ and CeO₂.

For the formulation packaged in the comparative bottle 3, at the end of both tests, on the other hand, both a significant variation in the chromatic coordinates and a perceptible alteration of the olfactory characteristics of the fragrance were observed compared to the original formulation not subjected to sun test.

The results of the stability tests therefore show that the glasses according to the invention possess a filtering power suitable for guaranteeing adequate protection from UV radiations for cosmetic products, in particular perfumery formulations.

### EXAMPLE 2

Four glass samples were prepared with the compositions given in Table 2 (samples 4-6) to evaluate the effectiveness of bismuth oxide in preventing the solarisation reaction between V₂O₅ and CeO₂. For each sample the filtering power PF and the chromatic coordinates before and after the sun test at 24 hours (on the empty container) described in Example 1 were determined. For comparison, Table 2 also reports the data relating to compositions 1 - 3 of Example 1.

**Table 2**

| | | | | | | | |
|---|---|---|---|---|---|---|---|
| | 1 | 2 | 3^{(a)} | 4 | | 5 | 6 |
| V₂O₅ (UV absorber) | 0.1^{(b)} | 0.06^{(b)} | | 0.1 | | 0.1 | 0.1 |
| CeO₂ (UV absorber) | | 0.5^{(b)} | 0.05 | 0.05 | | 0.05 | 0.05 |
| Bi₂O₃ (stabilising agent) | | | | 1.5 | | | 2.0 |
| Er₂O₃ (decolouring agent) | 0.3^{(b)} | 0.15^{(b)} | | 0.03^{(b)} | | 0.03^{(b)} | 0.03^{(b)} |
| Se (decolouring agent) | 0.0001 5^{(b)} | 0.0001 5^{(b)} | | 0.00015 (b) | | 0.0001 5^{(b)} | 0.00015 (b) |
| Co₃O₄ (decolouring agent) | 0.0002 1^{(b)} | 0.0002 0^{(b)} | | 0.00010 (b) | | 0.0001 0^{(b)} | 0.00010 (b) |
| UV filtering power (%) | 33.0 | 32.2 | 8.7 | 32.3 | | 33.1 | 32.5 |
| a* PRE-Sun test | -0.06 | -0.133 | 0.07 | -0.73 | | -0.37 | -0.25 |
| b* PRE-SUN test | 0.328 | 0.347 | 0.281 | 0.94 | | 0.73 | 0.41 |
| c* PRE-SUN test | 0.331 | 0.363 | 0.283 | 1.19 | | 0.82 | 0.48 |
| L* PRE-Sun test | 98.02 | 97.35 | 98.47 | 96.98 | | 97.05 | 97.21 |
| a* POST-Sun test | -0.01 | +2.63 | 0.06 | -0.12 | | +1.48 | -0.11 |
| b* POST-SUN test | 0,357 | 0.71 | 0.287 | 0.60 | | 0.60 | 0.34 |
| c* POST-SUN test | 0.340 | 0.615 | 0.290 | 0.94 | | 0.73 | 0.36 |
| L* POST-Sun test | 97.46 | 96.58 | 98 | 95.82 | | 96.30 | 96.40 |

| | | | | | | | |
|---|---|---|---|---|---|---|---|
| a: comparative example; b: percentage by weight referred to the weight of the vitrifiable mixture | | | | | | | |

By comparing the pre- and post-sun test chromatic coordinates, it is evident that the glass without V₂O₅ (sample 3) is stable to light, as is the glass containing V₂O₅ but without CeO₂ (sample 1).

In sample 2, however, a significant variation in the values of a* and b* shows that the simultaneous presence of V₂O₅ and CeO₂ makes the glass unstable to light due to the solarisation reaction. The same phenomenon is also observed when CeO₂ is at a reduced concentration (sample 5).

The data from the samples 4 and 6 show that the presence of Bi₂O₃ in the glass composition inhibits the solarisation reaction between CeO₂ and V₂O₅, preventing the glass from changing its colouring.

## Claims

1. Soda-lime glass container wherein the composition of the glass includes:
| | |
|---|---|
| - 64% - 75% | SiO₂ |
| - 10% - 18% | Na₂O |
| - 5% - 15% | CaO |
| - a UV absorber comprising 0.01% - 0.5% | V₂O₅; |
- a decolouring system comprising the following optical absorbers:
a. at least one of: 0.01% - 0.3% of Er₂O₃ and 0.0001% - 0.0005% of Se in the metallic state;
b. 0.00005 % - 0.0005 % of Co₃O₄,
the aforesaid percentages being percentages by weight referred to the weight of the glass.

2. Glass container according to claim 1, wherein the glass has a filtering power of the UV radiation, measured in the range 300 nm - 450 nm over a thickness of 4 mm, which is equal to or greater than 10%, preferably in the range 10% - 40%, said filtering power being defined equal to 100% decreased by the average value of the transmission of the light radiation in the range 300 nm - 450 nm.

3. Glass container according to any one of the preceding claims, wherein the glass, for a thickness of 4 mm, has a chromatic coordinate a* measured with illuminant C, between -1 and +1, preferably between -0.5 and +0.5, more preferably between -0.25 and +0.25.

4. Glass container according to any one of the preceding claims, wherein the glass, for a thickness of 4 mm, has a chromatic coordinate b* measured with illuminant C, between -1 and +1, preferably between -0,5 and +0,5.

5. Glass container according to any one of the preceding claims, wherein the glass, for a thickness of 4 mm, has a total light transmission equal to or greater than 85%, preferably equal to or greater than 90%, even more preferably equal to or above 95%.

6. Glass container according to any one of the preceding claims, wherein the glass is **characterised by** the following chromatic coordinates:
- Brightness (L*) equal to or greater than 98.0,
- Chroma (c*) less than or equal to 0.5.

7. Glass container according to any one of the preceding claims, wherein the redox potential of the glass, expressed as a molar ratio of the oxides FeO and Fe₂0₃, is in the range 0.10 - 0.40, preferably in the range 0.20 - 0.35.

8. Glass container according to any one of the preceding claims, wherein the glass composition comprises iron in a total amount, expressed as Fe₂0₃, in the range 0.0100% - 0.0300% by weight, more preferably in the range 0.0130% - 0.0200% by weight, the aforesaid percentages being referred to the weight of the glass.

9. Glass container according to any one of the preceding claims, wherein the glass composition comprises CeO₂, in the range 0.002% - 3.0% by weight, preferably in the range 0.1% - 1.0% by weight, the aforesaid percentages being referred to the weight of the glass.

10. Glass container according to any one of claims 1 to 8, wherein the glass composition comprises CeO₂, less than 0.01% by weight, preferably less than 0.005% by weight, even more preferably equal to or less than 0.002% by weight, the aforesaid percentages being referred to the weight of the glass.

11. Glass container according to claim 9, wherein the glass composition comprises Bi₂O₃, in the range 0.5% - 3.0% by weight of Bi₂O₃, preferably in the range 1.0% - 2.5% by weight, more preferably in the range 1.5% - 2.0% by weight, the aforesaid percentages being referred to the weight of the glass.

12. Glass container according to claim 11, wherein the ratio by weight CeO₂/Bi₂O₃ is in the range from 1:100 to 1:15, more preferably in the range from 1:50 to 1:20.

13. Glass container according to any one of the preceding claims, containing a perfumery product, a cosmetic product, a food product or a pharmaceutical product.

14. Method for producing a glass container according to claim 1 wherein the glass composition comprises:
| | |
|---|---|
| - 64% - 75% | SiO₂ |
| - 10% - 18% | Na₂O |
| - 5% - 15% | CaO |
| - a UV absorber comprising 0.01% - 0.5% | V₂O₅; |
- a decolouring system comprising the following optical absorbers:
a. at least one of: 0.01% - 0.3% of Er₂O₃ and 0.0001% - 0.0005% of Se in the metallic state;
b. 0.00005 % - 0.0005 of Co₃O₄,
the aforesaid percentages being percentages by weight referred to the weight of the glass;
wherein said method comprises:
- melting a solid vitrifiable mixture comprising all or a part of the aforesaid components of the composition to obtain a melted vitrifiable mass;
and
1) when the solid vitrifiable mixture comprises all the aforesaid components of the composition to obtain a melted vitrifiable mass
- forming the melted vitrifiable mass to obtain the glass container;
or
2) when the solid vitrifiable mixture comprises a part of the aforesaid components of the composition to obtain a melted vitrifiable mass, said part comprising at least said SiO₂, Na₂O, CaO and optionally one or more of the components of said UV absorber and said decolouring system
B. transporting the melted vitrifiable mass to at least one forming device;
C. combining the remaining part of the aforesaid components with the melted vitrifiable mass by means of one or more glass frits, the remaining part of the aforesaid components comprising at least one of the components of the UV absorber and of the decolouring system;
D. forming the melted vitrifiable mass coming from stage C to obtain the glass container.

## Patentansprüche

1. Behälter aus Kalk-Natron-Glas, wobei die Zusammensetzung des Glases umfasst:
| | |
|---|---|
| - 64% - 75% | SiO₂ |
| - 10% - 18% | Na₂O |
| - 5% - 15% | CaO |
- einen UV-Absorber, der 0,01% - 0,5% V₂O₅ enthält;
- ein Entfärbungssystem, das die folgenden optischen Absorber umfasst:
a. mindestens einen der folgenden Punkte: 0,01% - 0,3% Er₂O₃ und 0,0001% - 0,0005% Se in metallischem Zustand;
b. 0,00005 % - 0,0005 % von Co₃O₄,
Die vorgenannten Prozentsätze sind Gewichtsprozente, bezogen auf das Gewicht des Glases.

2. Glasbehälter nach Anspruch 1, wobei das Glas eine Filterleistung der UV-Strahlung, gemessen im Bereich von 300 nm - 450 nm über eine Dicke von 4 mm, aufweist, die gleich oder größer als 10%, vorzugsweise im Bereich von 10% - 40%, ist, wobei die Filterleistung gleich 100%, vermindert um den Durchschnittswert der Transmission der Lichtstrahlung im Bereich von 300 nm - 450 nm, definiert ist.

3. Glasbehälter nach einem der vorhergehenden Ansprüche, **dadurch gekennzeichnet, dass** das Glas bei einer Dicke von 4 mm einen Farbwert a*, gemessen mit der Lichtart C, zwischen -1 und +1, vorzugsweise zwischen -0,5 und +0,5, besonders bevorzugt zwischen -0,25 und +0,25 aufweist.

4. Glasbehälter nach einem der vorhergehenden Ansprüche, wobei das Glas bei einer Dicke von 4 mm einen Farbwert b*, gemessen mit der Lichtart C, zwischen -1 und +1, vorzugsweise zwischen -0,5 und +0,5, aufweist.

5. Glasbehälter nach einem der vorhergehenden Ansprüche, wobei das Glas bei einer Dicke von 4 mm eine Gesamtlichtdurchlässigkeit von mindestens 85%, vorzugsweise von mindestens 90% und noch bevorzugter von mindestens 95% aufweist.

6. Glasbehälter nach einem der vorhergehenden Ansprüche, wobei das Glas durch die folgenden Farbkoordinaten gekennzeichnet ist:
- Helligkeit (L*) gleich oder größer als 98,0,
- Chroma (c*) kleiner als oder gleich 0,5.

7. Glasbehälter nach einem der vorhergehenden Ansprüche, wobei das Redoxpotential des Glases, ausgedrückt als molares Verhältnis der Oxide FeO und Fe₂O₃, im Bereich von 0,10 - 0,40, vorzugsweise im Bereich von 0,20 - 0,35 liegt.

8. Glasbehälter nach einem der vorhergehenden Ansprüche, wobei die Glaszusammensetzung Eisen in einer Gesamtmenge, ausgedrückt als Fe₂O₃, im Bereich von 0,0100 % - 0,0300 Gewichtsprozent, vorzugsweise im Bereich von 0,0130 % - 0,0200 % nach Gewicht, umfasst, wobei sich die vorgenannten Prozentsätze auf das Gewicht des Glases beziehen.

9. Glasbehälter nach einem der vorhergehenden Ansprüche, wobei die Glaszusammensetzung CeO₂ im Bereich von 0,002 % - 3,0 %, vorzugsweise im Bereich von 0,1 % - 1,0 %, enthält, wobei sich die vorgenannten Prozentsätze auf das Gewicht des Glases beziehen.

10. Glasbehälter nach einem der Ansprüche 1 bis 8, wobei die Glaszusammensetzung weniger als 0,01 %, vorzugsweise weniger als 0,005 %, noch bevorzugter gleich oder weniger als 0,002 % CeO₂ enthält, wobei sich die vorgenannten Prozentsätze auf das Gewicht des Glases beziehen.

11. Glasbehälter nach Anspruch 9, wobei die Glaszusammensetzung Bi₂O₃ im Bereich von 0,5 % - 3,0 %, vorzugsweise im Bereich von 1,0 % - 2,5 %, besonders bevorzugt im Bereich von 1,5 % - 2,0 %, enthält, wobei sich die vorgenannten Prozentsätze auf das Gewicht des Glases beziehen.

12. Glasbehälter nach Anspruch 11, wobei das Gewichtsverhältnis CeO₂/Bi₂O₃ im Bereich von 1:100 bis 1:15, vorzugsweise im Bereich von 1:50 bis 1:20 liegt.

13. Glasbehälter nach einem der vorhergehenden Ansprüche, der ein Parfümerieprodukt, ein kosmetisches Produkt, ein Lebensmittelprodukt oder ein pharmazeutisches Produkt enthält.

14. Verfahren zur Herstellung eines Glasbehälters nach Anspruch 1, wobei die Glaszusammensetzung umfasst:
| | |
|---|---|
| - 64% - 75% | SiO₂ |
| - 10% - 18% | Na₂O |
| - 5% - 15% | CaO |
- einen UV-Absorber, der 0,01% - 0,5% V₂O₅ enthält;
- ein Entfärbungssystem, das die folgenden optischen Absorber umfasst:
a. mindestens einen der folgenden Punkte: 0,01% - 0,3% Er₂O₃ und 0,0001% - 0,0005% Se in metallischem Zustand;
b. 0,00005 % - 0,0005 % von Co₃O₄,
die vorgenannten Prozentsätze sind Gewichtsprozente, bezogen auf das Gewicht des Glases;
wobei das Verfahren Folgendes umfasst:
- Schmelzen eines festen verglasbaren Gemischs, das alle oder einen Teil der vorgenannten Komponenten der Zusammensetzung enthält, um eine geschmolzene verglasbare Masse zu erhalten;
und
1) wenn das feste verglasbare Gemisch alle vorgenannten Bestandteile der Zusammensetzung enthält, um eine geschmolzene verglasbare Masse zu erhalten
- Formung der geschmolzenen verglasbaren Masse, um den Glasbehälter zu erhalten;
oder
2) wenn die feste verglasbare Mischung einen Teil der vorgenannten Komponenten der Zusammensetzung enthält, um eine geschmolzene verglasbare Masse zu erhalten, wobei dieser Teil mindestens das SiO₂, Na₂O, CaO und gegebenenfalls eine oder mehrere der Komponenten des UV-Absorbers und des Entfärbungssystems enthält
B. Transportieren der geschmolzenen verglasbaren Masse zu mindestens einer Formgebungsvorrichtung;
C. Vereinigen des verbleibenden Teils der vorgenannten Komponenten mit der geschmolzenen verglasbaren Masse mittels einer oder mehrerer Glasfritten, wobei der verbleibende Teil der vorgenannten Komponenten mindestens eine der Komponenten des UV-Absorbers und des Entfärbungssytem umfasst;
D. Formung der geschmolzenen verglasungsfähigen Masse aus Stufe C zur Herstellung des Glasbehälters.

## Revendications

1. Récipient en verre sodocalcique dans lequel la composition du verre comprend:
| | |
|---|---|
| - 64% - 75% | SiO₂ |
| - 10% - 18% | Na₂O |
| - 5% - 15% | CaO |
- un absorbeur d'UV comprenant 0,01% - 0,5% de V₂O₅;
- un système de décoloration comprenant les absorbeurs optiques suivants:
a. au moins un des éléments suivants: 0,01% - 0,3% d'Er₂O₃ et 0,0001% - 0,0005% de Se à l'état métallique;
b. 0,00005 % - 0,0005 % de Co₃O₄,
les pourcentages susmentionnés étant des pourcentages en poids par rapport au poids du verre.

2. Récipient en verre selon la revendication 1, dans lequel le verre a un pouvoir filtrant du rayonnement UV, mesuré dans la plage 300 nm - 450 nm sur une épaisseur de 4 mm, qui est égal ou supérieur à 10%, de préférence dans la plage 10% - 40%, ledit pouvoir filtrant étant défini comme étant égal à 100% diminué de la valeur moyenne de la transmission du rayonnement lumineux dans la plage 300 nm - 450 nm.

3. Récipient en verre selon l'une quelconque des revendications précédentes, dans lequel le verre, pour une épaisseur de 4 mm, présente une coordonnée chromatique a* mesurée avec l'illuminant C, comprise entre -1 et +1, de préférence entre -0,5 et +0,5, plus préférentiellement entre -0,25 et +0,25.

4. Récipient en verre selon l'une quelconque des revendications précédentes, dans lequel le verre, pour une épaisseur de 4 mm, présente une coordonnée chromatique b* mesurée avec l'illuminant C, comprise entre -1 et +1, de préférence entre -0,5 et +0,5.

5. Récipient en verre selon l'une quelconque des revendications précédentes, dans lequel le verre, pour une épaisseur de 4 mm, présente une transmission totale de la lumière égale ou supérieure à 85%, de préférence égale ou supérieure à 90%, de préférence encore égale ou supérieure à 95%.

6. Récipient en verre selon l'une quelconque des revendications précédentes, dans lequel le verre est **caractérisé par** les coordonnées chromatiques suivantes:
- Luminosité (L*) égale ou supérieure à 98,0,
- Chroma (c*) inférieur ou égal à 0,5.

7. Récipient en verre selon l'une quelconque des revendications précédentes, dans lequel le potentiel redox du verre, exprimé en tant que rapport molaire des oxydes FeO et Fe₂0₃, est compris entre 0,10 - 0,40, de préférence entre 0,20 - 0,35.

8. Récipient en verre selon l'une quelconque des revendications précédentes, dans lequel la composition du verre comprend du fer dans une quantité totale, exprimée en Fe₂0₃, comprise entre 0,0100% - 0,0300% en poids, plus préférentiellement entre 0,0130% - 0,0200% en poids, les pourcentages susmentionnés étant rapportés au poids du verre.

9. Récipient en verre selon l'une quelconque des revendications précédentes, dans lequel la composition de verre comprend CeO₂, dans la plage de 0,002% - 3,0% en poids, de préférence dans la plage de 0,1% - 1,0% en poids, les pourcentages susmentionnés étant rapportés au poids du verre.

10. Récipient en verre selon l'une quelconque des revendications 1 à 8, dans lequel la composition du verre comprend CeO₂, moins de 0,01% en poids, de préférence moins de 0,005% en poids, de préférence encore égal ou inférieur à 0,002% en poids, les pourcentages susmentionnés étant rapportés au poids du verre.

11. Récipient en verre selon la revendication 9, dans lequel la composition du verre comprend Bi₂O₃, dans la gamme 0,5% - 3,0% en poids de Bi₂O₃, de préférence dans la gamme 1,0% - 2,5% en poids, plus préférentiellement dans la gamme 1,5% - 2,0% en poids, les pourcentages susmentionnés étant rapportés au poids du verre.

12. Récipient en verre selon la revendication 11, dans lequel le rapport en poids CeO₂/Bi₂O₃ est compris entre 1:100 et 1:15, de préférence entre 1:50 et 1:20.

13. Récipient en verre selon l'une quelconque des revendications précédentes, contenant un produit de parfumerie, un produit cosmétique, un produit alimentaire ou un produit pharmaceutique.

14. Procédé de fabrication d'un récipient en verre selon la revendication 1, dans lequel la composition du verre comprend:
| | |
|---|---|
| - 64% - 75% | SiO₂ |
| - 10% - 18% | Na₂O |
| - 5% - 15% | CaO |
- un absorbeur d'UV comprenant 0,01% - 0,5% de V₂O₅;
- un système de décoloration comprenant les absorbeurs optiques suivants:
a. au moins un des éléments suivants : 0,01% - 0,3% d'Er₂O₃ et 0,0001% - 0,0005% de Se à l'état métallique;
b. 0,00005 % - 0,0005 % de Co₃O₄,
les pourcentages susmentionnés étant des pourcentages en poids par rapport au poids du verre;
dans lequel ledit procédé comprend:
- faire fondre un mélange solide vitrifiable comprenant tout ou partie des composants précités de la composition pour obtenir une masse vitrifiable fondue;
et
1) lorsque le mélange solide vitrifiable comprend tous les composants précités de la composition pour obtenir une masse vitrifiable fondue
- former la masse vitrifiable fondue pour obtenir le récipient en verre; ou
2) lorsque le mélange solide vitrifiable comprend une partie des composants précités de la composition pour obtenir une masse vitrifiable fondue, ladite partie comprenant au moins lesdits SiO₂, Na₂O, CaO et éventuellement un ou plusieurs des composants dudit absorbeur d'UV et dudit système de décoloration
B. transporter la masse vitrifiable fondue vers au moins un dispositif de formage;
C. combiner la partie restante des composants susmentionnés avec la masse vitrifiable fondue au moyen d'un ou de plusieurs frittes de verre, la partie restante des composants susmentionnés comprenant au moins l'un des composants de l'absorbeur d'UV et du système de décolorant;
D. former la masse vitrifiable fondue provenant de l'étape C pour obtenir le récipient en verre.
